# FASCICULE DE BREVET EUROPEEN

(11) **EP 2 247 876 B1**
(45) Date de publication et mention de la délivrance du brevet: **20.11.2013**
(21) Numéro de dépôt: 09719374.2
(22) Date de dépôt: 11.02.2009
(51) Int. Cl.: F16J 3/04, B61H 13/34

(54) **ENSEMBLE DE PROTECTION COMPRENANT UN SOUFFLET DE PROTECTION**
SCHUTZANORDNUNG MIT EINEM SCHUTZFALTENBALG
PROTECTIVE ASSEMBLY COMPRISING A PROTECTIVE BELLOWS

(30) Priorité: 22.02.2008 FR 0800964
(43) Date de publication de la demande: 10.11.2010
(73) Titulaire: Société Nationale des Chemins de Fer Français - SNCF, 75014 Paris (FR)
(72) Inventeur: LEGAULT, Jean-Paul, 35470 Bain de Bretagne (FR)
(74) Mandataire: Gaillarde, Frédéric F. Ch.
(86) Numéro de dépôt international: PCT/FR2009/000152
(87) Numéro de publication internationale: WO 2009/112716

(56) Documents cités:
- DE-A1- 2 945 234
- DE-A1- 3 942 701
- DE-A1- 19 857 389
- DE-U1- 7 732 611

## Description

La présente invention se rapporte à un dispositif de freinage comprenant un soufflet de protection comportant un corps plissé de forme générale sensiblement tubulaire présentant une succession d'ondes alternant crête et creux.

Un dispositif de freinage d'un train, par exemple, comprend généralement un système d'actionnement d'une semelle de frein qui est, lors d'un freinage, forcé en contact avec une roue de manière à créer une force de frottement qui génère un couple de freinage.

Il en va de même pour un système de frein à disque dans lequel un disque, solidaire de la roue, est enserré par des plaquettes venant, lors d'une opération de freinage, frotter de chaque côté dudit disque.

Les plaquettes ou la semelle de frein sont généralement actionnées par un ou plusieurs pistons hydrauliques ou pneumatiques aptes à forcer fortement les plaquettes ou la semelle contre le disque ou la roue.

Les pistons sont des organes sensibles qui peuvent être fréquemment exposés à des projections de ballast, cailloux, ou autres, ce qui risquent de les endommager.

Afin de protéger ces pistons, ils sont généralement entourés par un ensemble de protection comprenant un soufflet de protection comportant un corps plissé apte à suivre les mouvements d'extension ou de rétractation du piston. Un tel soufflet de protection présente une forme générale sensiblement tubulaire présentant une succession d'ondes alternant crête et creux. Un tel soufflet de protection sera généralement réalisé dans une matière élastomère de type caoutchouc.

Ainsi, en cas de projection de ballast ou cailloux ou autres, le piston n'est plus directement exposé au choc qui est amorti par le soufflet.

Toutefois, le soufflet reste un organe fragile qui, sous l'effet d'impacts répétés, peut se déchirer et plus généralement être endommagé.

La durée de vie moyenne des soufflets de protection actuellement utilisés est d'environ six ans. L'utilisation de certains matériaux moins résistants peut abaisser cette durée de vie à seulement trois ans.

Par ailleurs, le nombre important de soufflets endommagés et changés entraîne un taux de dépose important des organes de frein et donc un coût de maintenance curative élevé ainsi que des rejets élevés de matériaux caoutchouc, polluants ou avec un coût de retraitement élevé.

DE 7 732 611 U1 décrit un dispositif de freinage selon le préambule de la revendication 1. DE 29 45 234 A1 décrit un autre exemple d'utilisation de soufflet.

Il existe donc un besoin pour un nouveau soufflet plus résistant possédant une durée de vie en exploitation plus élevée, ce qui nécessite des opérations de maintenance moins fréquentes ou plus rapides, et une quantité plus faible de matériaux rejetés.

Pour ce faire, la présente invention se rapporte à un dispositif de freinage selon la revendication 1.

Ainsi, il a été en effet constaté de manière surprenante que la présence d'une surépaisseur de matière formant un bourrelet périphérique au niveau des crêtes du soufflet combiné à un montage en compression dudit soufflet permettait d'obtenir des propriétés d'amortissement et de résistance grandement améliorée par rapport à un ensemble de protection ne possédant pas ces caractéristiques.

Avantageusement, le corps présente un bourrelet externe périphérique au niveau de chaque crête d'onde.

Avantageusement encore, le corps présente, au niveau du bourrelet périphérique, un rapport épaisseur sur largeur du bourrelet sensiblement égal ou inférieur à ½, depréférence, sensiblement égal à 1/2. Ainsi, chaque crête possède un coefficient de résistance et d'amortissement optimal conformément à la loi de Goodrich.

De manière préférentielle, le soufflet de protection est obtenu par moulage.

Avantageusement, le soufflet est réalisé à partir d'un matériau élastomère de type caoutchouc.

Avantageusement encore, le soufflet est réalisé à partir de polychloroprène.

De manière préférentielle, le soufflet présente des extrémités équipées d'au moins un disque de protection.

Préférentiellement, le soufflet présente une section générale cylindrique.

Avantageusement, le soufflet présente une pluralité de sections de diamètre général différent.

La présente invention se rapporte encore à un train, caractérisé en ce qu'il est équipé d'au moins un système de freinage selon l'invention.

La mise en oeuvre de l'invention sera mieux comprise à l'aide de la description détaillée qui est exposée ci-dessous en regard du dessin annexé.
La figure 1 est une représentation schématique d'un système de freinage d'un train vu en coupe partielle comprenant un piston logé dans un soufflet de protection selon l'art antérieur.
La figure 2 est une représentation schématique partielle en coupe longitudinale d'un soufflet selon l'invention entourant un piston du système de freinage de la figure 1.
La figure 3 est une représentation d'une variante de réalisation d'un soufflet selon l'invention.

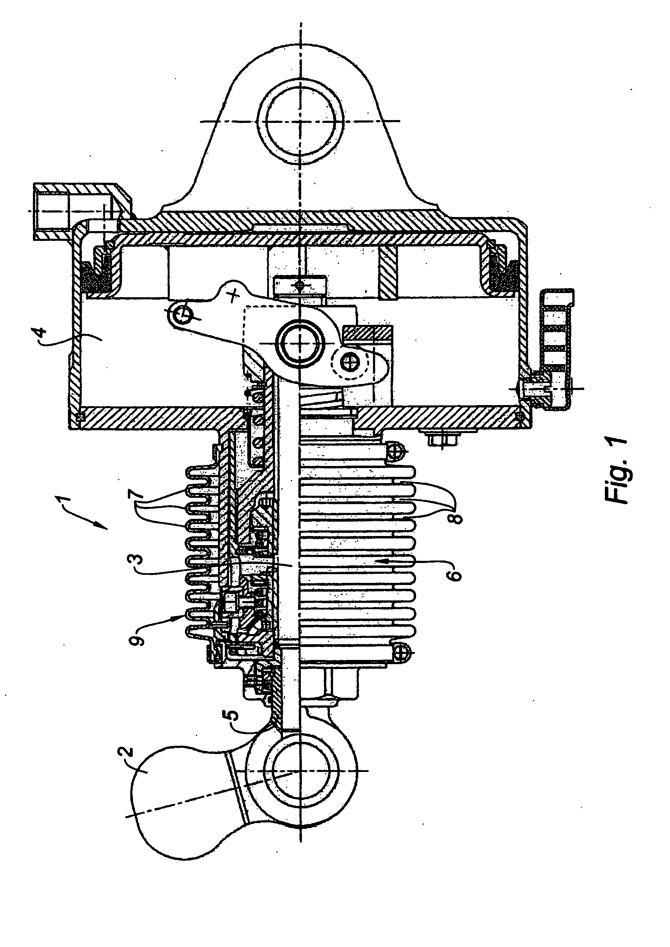

Un dispositif 1 de freinage d'un train tel que représenté sur la figure 1 comprend une semelle de freinage 2 montée mobile sur un étrier 5 de manière à pouvoir passer alternativement d'une position de freinage dans laquelle elle vient en fortement en contact avec une roue (non représentée) du train et une position d'écartement dans laquelle elle est écartée de la roue et ne génère aucune force de frottement avec cette dernière.

Le basculement de la semelle de frein 2 s'effectue sous l'action d'un piston 3 commandé par un boîtier de commande 4.

Entre l'étrier 5 et le boîtier de commande 4, le piston 3 est logé dans ensemble de protection comprenant un soufflet de protection 6 présentant un corps plissé de forme générale sensiblement tubulaire présentant une succession d'ondes alternant crête 7 et creux 8 et réalisé dans un matériau élastomère de type caoutchouc.

Le soufflet de protection 6 est apte à se déformer pour suivre les mouvements d'extension ou de rétractation du piston 3.

L'invention se rapporte à un soufflet de protection 106 différant d'un soufflet de protection 6 selon l'art antérieur par le fait qu'il présente un corps plissé comprenant une paroi périphérique externe 9 comportant une succession de crêtes 7 et de creux 8 selon un axe longitudinal dudit soufflet 106, ledit soufflet de protection 106 étant monté en comrpessions.

Chaque crête 7 présente une surépaisseur de matière formant un bourrelet périphérique 10 s'étendant sensiblement perpendiculairement à l'axe longitudinal du soufflet 106.

Avantageusement, ce bourrelet 10 est tel qu'il satisfait au rapport de la loi de goodrich, c'est-à-dire qu'au niveau du bourrelet 10, l'épaisseur de la paroi 9 est sensiblement égale à deux fois la largeur du bourrelet 10.

Avantageusement également, le soufflet de protection est encadré par des disques de protections 12, permettant également sa fixation et son maintien.

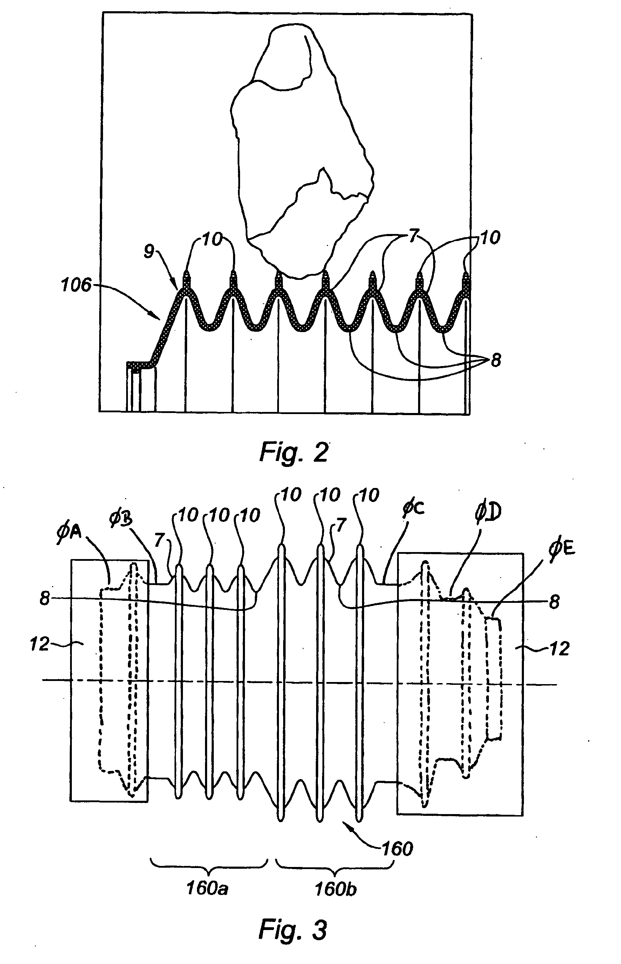

Tel que représenté sur la figure 3, on pourra prévoir un soufflet de protection 160 possèdant des portions 160a, 160b de sections moyennes générales différentes.

Ainsi, le soufflet de protection 160 représenté sur la figure 3 peut répondre à six configurations différentes suivant la combinaison de diamètres de fixation souhaités.

Ceci permet d'utiliser le soufflet de protection 106 selon différentes configurations et répondre à des diamètres de fixation différents.

Ceci permet également de réaliser un nombre limité de moules standardisés de soufflets de protection adaptables à de nombreuses configurations.

Bien que l'invention ait été décrite avec un exemple particulier de réalisation, il est bien évident qu'elle n'y est nullement limitée et qu'elle comprend tous les équivalents techniques des moyens décrits ainsi que leurs combinaisons si celles-ci entrent dans le cadre de l'invention.

Notamment, les applications d'un tel soufflet de protection ne sont pas nécessairement limitées à un système de freinage d'un train, mais peuvent concerner tout organe exposé à des projections. On peut également concevoir que le soufflet ne protège pas un organe précis mais puisse servir de plot amortisseur sur une autoroute par exemple.

## Revendications

1. Dispositif de freinage comprenant au moins un vérin (3) apte à forcer une semelle (2) de freinage contre au moins un élément mobile d'un véhicule, le vérin étant logé à l'intérieur d'un ensemble de protection comprenant un soufflet de protection (160) comportant un corps plissé de forme générale sensiblement tubulaire présentant une succession d'ondes alternant crête (7) et creux (8), **caractérisé en ce que** le corps présente, au niveau d'au moins une crête d'onde, un bourrelet externe périphérique (10), et **en ce que** ledit soufflet est monté en compression au sein de l'ensemble de protection.

2. Dispositif de freinage selon la revendication 1, **caractérisé en ce que** le corps du soufflet de protection (160) présente un bourrelet externe périphérique (10) au niveau de chaque crête (7) d'onde.

3. Dispositif de freinage selon l'une quelconque des revendications 1 ou 2, **caractérisé en ce que** le corps du soufflet de protection (160) présente, au niveau du bourrelet périphérique (10), un rapport épaisseur sur largeur du bourrelet sensiblement égal ou inférieur à 1/2.

4. Dispositif de freinage selon la revendication 3, **caractérisé en ce que** le corps du soufflet de protection (160) présente, au niveau du bourrelet périphérique (10), un rapport épaisseur sur largeur du bourrelet sensiblement égal à 1/2.

5. Dispositif de freinage selon l'une quelconque des revendications 1 à 4, **caractérisé en ce que** le soufflet de protection (160) est obtenu par moulage.

6. Dispositif de freinage selon l'une quelconque des revendications 1 à 5, **caractérisé en ce que** le soufflet de protection (160) est réalisé à partir d'un matériau élastomère de type caoutchouc.

7. Dispositif de freinage selon la revendication 6, **caractérisé en ce que** le soufflet de protection (160) est réalisé à partir de polychloroprène.

8. Dispositif de freinage selon l'une quelconque des revendications 1 à 7, **caractérisé en ce qu'**il comprend au moins un disque de protection (12) équipant une extrémité du soufflet de protection (160).

9. Dispositif de freinage selon l'une quelconque des revendications 1 à 8, **caractérisé en ce que** le soufflet de protection (160) présente une section générale cylindrique.

10. Dispositif de freinage selon l'une quelconque des revendications 1 à 9, **caractérisé en ce que** le soufflet de protection (160) - présente une pluralité de sections (160a, 160b) de diamètre moyen général différent.

11. Train, **caractérisé en ce qu'**il est équipé d'au moins un système de freinage selon la revendication 11.

## Patentansprüche

1. Bremsvorrichtung, umfassend mindestens einen Aktuator (3), der dazu ausgelegt ist, eine Bremssohle (2) gegen mindestens ein bewegliches Element eines Fahrzeugs zu treiben, wobei der Aktuator im Inneren einer Schutzeinheit mit einem Schutzbalg (160) angeordnet ist, umfassend einen gefalteten, im Wesentlichen rohrförmigen Körper, der eine Aufeinanderfolge von abwechselnd Wellenspitzen (7) und Wellentälern (8) aufweist, **dadurch gekennzeichnet, dass** der Körper auf der Ebene mindestens einer Wellenspitze einen peripheren äußeren Wulst (10) aufweist, und dadurch, dass der Balg komprimiert innerhalb der Schutzeinheit montiert ist.

2. Bremsvorrichtung nach Anspruch 1, **dadurch gekennzeichnet, dass** der Körper des Schutzbalgs (160) einen peripheren äußeren Wulst (10) auf der Ebene jeder Wellenspitze (7) aufweist.

3. Bremsvorrichtung nach einem der Ansprüche 1 oder 2, **dadurch gekennzeichnet, dass** der Körper des Schutzbalgs (160) auf der Ebene des peripheren äußeren Wulstes (10) ein Dicke-Länge-Verhältnis des Wulstes aufweist, das im Wesentlichen gleich oder kleiner als 1/2 ist.

4. Bremsvorrichtung nach Anspruch 3, **dadurch gekennzeichnet, dass** der Körper des Schutzbalgs (160) auf der Ebene des peripheren äußeren Wulstes (10) ein Dicke-Länge-Verhältnis des Wulstes aufweist, das im Wesentlichen gleich 1/2 ist.

5. Bremsvorrichtung nach einem der Ansprüche 1 bis 4, **dadurch gekennzeichnet, dass** der Schutzbalg (160) durch Formung erhalten wird.

6. Bremsvorrichtung nach einem der Ansprüche 1 bis 5, **dadurch gekennzeichnet, dass** der Schutzbalg (160) auf der Grundlage eines elastomeren Materials vom Typ Gummi hergestellt ist.

7. Bremsvorrichtung nach Anspruch 6, **dadurch gekennzeichnet, dass** der Schutzbalg (160) aus Polychloropren hergestellt ist.

8. Bremsvorrichtung nach einem der Ansprüche 1 bis 7, **dadurch gekennzeichnet, dass** er mindestens eine Schutzscheibe (12) umfasst, die ein Ende des Schutzbalgs (160) ausstattet.

9. Bremsvorrichtung nach einem der Ansprüche 1 bis 8, **dadurch gekennzeichnet, dass** der Schutzbalg (160) einen im Allgemeinen zylindrischen Abschnitt aufweist.

10. Bremsvorrichtung nach einem der Ansprüche 1 bis 9, **dadurch gekennzeichnet, dass** der Schutzbalg (160) eine Vielzahl von Abschnitten (160a, 160b) mit einem im Allgemeinen verschiedenen mittleren Durchmesser aufweist.

11. Zug, **dadurch gekennzeichnet, dass** er mindestens mit einem Bremssystem nach Anspruch 11 ausgestattet ist.

## Claims

1. A braking device comprising at least one jack (3) capable forcing a brake shoe (2) against at least one moving element of a vehicle, the jack being housed inside a protective assembly comprising a protective bellows (160) having a folded body with a generally substantially tubular shape with a series of alternating peak (7) and hollow (8) convolutions, **characterized in that** the body has, at least at one convolution peak, a peripheral outer bead (10), and **in that** said bellows is mounted in compression within the protective assembly.

2. The braking device according to claim 1, **characterized in that** the body of the protective bellows (160) has a peripheral outer bead (10) at each convolution peak (7).

3. The braking device according to any one of claims 1 or 2, **characterized in that** at the peripheral bead (10) of the body of the protective bellows (160), the ratio of the thickness to the bead width is substantially smaller than or equal to 1/2.

4. The braking device according to claim 3, **characterized in that** at the peripheral bead (10) of the body of the protective bellows (160), the ratio of the thickness to the bead width is substantially equal to 1/2.

5. The braking device according to any one of claims 1 and 4, **characterized in that** the protective bellows (160) is obtained by molding.

6. The braking device according to any one of claims 1 to 5, **characterized in that** the protective bellows (160) is made from an elastomer material of the rubber type.

7. The braking device according to claim 6, **characterized in that** the protective bellows (160) is made from polychloroprene.

8. The braking device according to any one of claims 1 to 7, **characterized in that** it comprises at least one protective disc (12) equipping one end of the protective bellows (160).

9. The braking device according to any one of claims 1 to 8, **characterized in that** the protective bellows (160) has a generally cylindrical section.

10. The braking device according to any one of claims 1 to 9, **characterized in that** the protective bellows (160) has a plurality of sections (160a, 160b) with different general average diameters.

11. A train, **characterized in that** it is equipped with at least one braking system according to claim 11.
